# EUROPEAN PATENT SPECIFICATION

(11) **EP 2 513 179 B1**
(45) Date of publication and mention of the grant of the patent: **18.02.2015**
(21) Application number: 10800842.6
(22) Date of filing: 20.12.2010
(51) Int. Cl.: C08G 18/08, C08G 18/12, C08G 18/32, C08G 18/44, C08G 18/75, C09D 175/04

(54) **WATER-BASED COATING COMPOSITIONS**
WASSERBASIERTE BESCHICHTUNGSZUSAMMENSETZUNGEN
COMPOSITIONS DE REVETEMENT A BASE D'EAU

(30) Priority: 18.12.2009 US 287731 P
(43) Date of publication of application: 24.10.2012
(73) Proprietor: Coatings Foreign IP Co. LLC, Wilmington, DE 19801 (US)
(72) Inventor: FIEBERG, Andreas, 45657 Recklinghausen (DE); FLOSBACH, Carmen, 42287 Wuppertal (DE); BRUYLANTS, Paul, P., B-3191 Hever (BE); HUYBRECHTS, Jozef, Theresia, B-2300 Turnhout (BE)
(74) Representative: Maiwald Patentanwalts GmbH
(86) International application number: PCT/US2010/061264
(87) International publication number: WO 2011/075718

(56) References cited:
- EP-A1- 2 065 417
- WO-A1-2007/119305
- WO-A1-2008/034717
- CA-C- 2 143 026
- JP-A- 2007 154 352
- JP-A- 2007 270 362
- JP-A- 2009 235 257
- US-A1- 2002 004 553
- US-A1- 2003 088 045
- US-A1- 2004 192 835
- US-A1- 2005 027 092
- US-A1- 2005 031 858
- US-A1- 2006 293 468
- US-A1- 2007 083 002
- US-A1- 2007 167 565

## Description

### Field of the Invention

The invention relates to a process for the multilayer coating of substrates using water-based coating compositions comprising polyurethane binders. The water-based coating compositions used in the process of the invention are in particular suitable as pigmented water-based base coat compositions in multilayer coating and repair coating of vehicles.

### Description of Related Art

For environmental reasons, water-based coating compositions are increasingly being used in vehicle coating, both for original coating and for repair coating.

Due to their excellent properties it is common practice to use water-dilutable polyurethane resins in the form of aqueous dispersions as the main binder in aqueous coating compositions and especially also in water-borne base coat compositions.

The properties of the water-based base coat compositions and the coatings obtained thereof are substantially determined by the specific structure of the polyurethanes used.

EP 0 427 979, for example, describes aqueous coating compositions which contain a water-dispersible binder and aluminium pigments, where the binder comprises a water-dispersible polyurethane polyurea containing at least 200 milliequivalents, per 100 g of solids, of chemically incorporated carbonate groups and not more than, in total, 320 milliequivalents, per 100 g of solids, of chemically incorporated urethane groups and chemically incorporated urea groups. These water-dispersible polyurethane polyureas are used as binders or binder components for water-borne metallic base coat compositions.

Also, EP 1 159 323 describes water-dilutable polyurethane dispersions based on polyester polyols, dimethylolpropionic acid and diisocyanates, which have been chain-extended with compounds containing amino groups. Polyamines or aminoalcohols may be used for chain extension.

However, the coatings produced when using aqueous coating compositions do not in all respects achieve the high quality levels of conventional solvent-based coatings. For example, in particular in case of water-based effect base coat compositions, the long-term stability of the water-based base coat compositions is not satisfactory. For example, a thickening of the water-based compositions can be observed during storage. This is not acceptable in all applications where a long-term stability of more than 12 month is required, for example in vehicle repair coating.

Furthermore, EP 1 736 490 describes hydrolysis-stable clear coat compositions to be used as soft feel paints which comprise hydroxyl-free polyurethanes and hydroxyl-containing polyurethanes, wherein the polyurethanes comprise polycarbonate polyols containing at least 25 % by weight of 1,4-butanediol.

Furthermore, EP 1736490 describes water-based coating compositions comprising hydroxyl-free polyurethane/urea binders, hydroxyl group containing polyurethane/urea binders and a cross-linker, wherein polyurethane/urea binders both comprise polycarbonate polyols which have a fraction of at least 25 % by weight of 1,4-butanediol as a synthesis component. The water-based coating compositions are used in particular as soft feel paints on plastics or wood substrates.

A requirement accordingly still remains for pigmented water-based coating compositions, in particular water-based effect base coat compositions to be used in vehicle coating (vehicle bodies and vehicle body parts), in particular in vehicle repair coating, which compositions are long-term stable for, e.g., at least 12-24 month, which compositions do not thicken during storage and application of which yield coatings with perfect optical quality and a good metallic effect. The coatings obtained should also fulfil the conventional requirements which are applied to a vehicle coating, in particular a vehicle repair coating, for example with regard to chemical and weathering resistance and resistance to mechanical influences.

### Summary of the Invention

The present invention relates to a process according to claim 1.

Preferably the at least one water-dilutable polyurethane binder is obtained by reacting components comprising:
a) at least one polyisocyanate, having preferably a molecular weight of 126 - 500,
b) at least one polyhydroxyl compound, having preferably a number average molecular weight Mn of 300 - 5000, said polyhydroxyl compound comprises at least 50 % by weight of at least one polycarbonate polyol, which is liquid at 20°C, having preferably a number average molecular weight Mn of 300 - 5000, more preferred of 500 - 4000, the % by weight are based on the total amount of the polyhydroxyl compound,
c) at least one compound containing at least one functional group reactive towards isocyanate groups and at least one group selected from a group consisting of ionic group, group capable of forming ions and non-ionic hydrophilic group, and
d) optionally at least one at least di-functional compound having hydroxyl and/or amino groups and preferably a molecular weight of 32 - 300.

Preferably the water-dilutable polyurethane binder comprises at least 100 milliequivalents, preferably 100 - 450 milliequivalents of carbonate groups (per 100 g polyurethane binder solids). More preferred the water-dilutable polyurethane binder comprises at least 100 milliequivalents, preferably 100 - 450 milliequivalents of carbonate groups (per 100 g polyurethane binder solids) and at least 100 milliequivalents, preferably 100 - 300 milliequivalents of urethane and urea groups (per 100 g polyurethane binder solids).

Surprisingly it has been found that water-based special effect base coat compositions based on the above-described polyurethane binders do not thicken during storage within 12-24 month and yield coatings which have consistently good optical appearance and exhibit a very good effect or metallic effect.

In comparison similar polyurethanes based on solid polycarbonate polyols have a tendency to thicken during storage, e.g. within 12-24 month or even after 4 to 6 month. Thickening during storage may lead to viscosities at least three times higher than the starting viscosity.

### Detailed Description of the Embodiments

The invention will be explained in greater detail below.

It will be appreciated that certain features of the invention which are, for clarity, described above and below in the context of separate embodiments may also be provided in combination in a single embodiment. Conversely, various features of the invention that are, for brevity, described in the context of a single embodiment may also be provided separately or in any sub-combination. In addition, references in the singular may also include the plural (for example, "a" and "an" may refer to one, or one or more) unless the context specifically states otherwise.

The short term polyurethane as used here and hereinafter shall be taken to mean polyurethane binder. The polyurethane binder may also contain urea groups.

The short term liquid polycarbonate polyol as used here and hereinafter should be taken to mean a polycarbonate polyol which is liquid at 20°C.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard and tetrahydrofurane as the liquid phase.

Melting temperatures have been determined by means of DSC (Differential Scanning Calorimetry) according to DIN 53765-B-10 at a heating rate of 10 K/min,

Glass transition temperatures have been determined by means of DSC (Differential Scanning Calorimetry) according to ISO 11357-2 at a heating rate of 10 K / minute.

Water-based coating compositions are coating compositions, wherein water is used as solvent or thinner when preparing and/or applying the coating composition. Usually, water-based coating compositions contain 30 to 90% by weight of water, based on the total amount of the coating composition and optionally, up to 20% by weight, preferably, below 15% by weight of organic solvents, based on the total amount of the coating composition.

First of all the polyurethane A) to be used in the water-based coating compositions of the present invention shall be described in more detail.

The polyurethane A) has preferably a number average molecular weight Mn of 500 - 20,000 and a weight average molecular weight Mw of 20,000 - 500,000, a hydroxyl number of 0 to 150 mg KOH/g and an acid number of 15 - 50, preferably of 15 - 35 mg KOH/g.

The polyurethane A) is based on at least one polyhydroxyl compound, said polyhydroxyl compound comprises at least 50 % by weight, preferably 60 - 100 % by weight of at least one liquid polycarbonate polyol, the % by weight are based on the total amount of the polyhydroxyl compound. The liquid polycarbonate polyols may have, for example, a melting point below 10 to 15 °C and accordingly show an endothermic peak in the DSC curve. Also, the liquid polycarbonate polyols may not show an endothermic peak in the DSC curve, for example, they may not show an endothermic peak in the DSC curve above - 30°C.

The liquid polycarbonate polyols have a glass transition temperature of, for example, 0°C or below, preferably of -50 to 0 °C.

A detailed description of the polycarbonate polyol is given in the description of component b) below.

Preferably the polyurethane A) is produced by reacting components a), b), c) and optionally component d) and/or further components.

Any desired organic polyisocyanates, preferably diisocyanates may be used, individually or in combination, as component a) for the production of the polyurethane A). The polyisocyanates may, for example, be of an aromatic, aliphatic and/or cycloaliphatic nature and have a molecular weight of preferably 126 - 500. These may also comprise diisocyanates containing ether or ester groups. Examples of suitable diisocyanates are trimethylene diisocyanate, tetramethylene diisocyanate, pentamethylene diisocyanate, hexamethylene diisocyanate, propylene diisocyanate, ethylene diisocyanate, 2,3-dimethylethylene diisocyanate, 1-methyltrimethylene diisocyanate, 1,3-cyclopentylene diisocyanate, 1,4-cyclohexylene diisocyanate, 1,2-cyclohexylene diisocyanate, 1,3-phenylene diisocyanate, 1,4-phenylene diisocyanate, 2,4-tolylene diisocyanate, 2,6-tolylene diisocyanate, 1-isocyanatomethyl-5-isocyanato-1,3,3-trimethylcyclohexane, bis(4-isocyanatophenyl)methane, 4,4-diisocyanatodiphenyl ether, 1,5-dibutylpentamethylene diisocyanate, 2,3-bis(8-isocyanatooctyl)-4-octyl-5-hexylcyclohexane, 3-isocyanatomethyl-1-methylcyclohexyl isocyanate and/or 2,6-diisocyanatomethyl caproate.

It is also possible to use sterically hindered isocyanates with 4 to 25, preferably 6 to 16 C atoms, which contain in alpha position relative to the NCO group one or two linear, branched or cyclic alkyl groups with 1 to 12, preferably 1 to 4 C atoms as a substituent on the parent structure. The parent structure may consist of an aromatic or alicyclic ring or of an aliphatic linear or branched C chain having 1 to 12 C atoms. Examples of these are isophorone diisocyanate, bis(4-isocyanatocyclohexyl)methane, 1,1,6,6-tetramethylhexamethylene diisocyanate, 1,5-dibutylpentamethylene diisocyanate, 3-isocyanatomethyl-1-methylcyclohexyl isocyanate, p- and m-tetramethylxylylene diisocyanate and/or the corresponding hydrogenated homologues.

Compounds usable as component b) are polyester polyols, polycarbonate polyols, polyether polyols, polylactone polyols and/or poly(meth)acrylate polyols or the corresponding diols. The polyols and diols may in each case be used individually or in combination with one another.

However, it is essential that component b) comprises at least 50 % by weight of at least one liquid polycarbonate polyol having preferably a molecular weight Mn of 300 - 5000, more preferred of 500 - 4000. The liquid polycarbonate polyols are viscous liquids at room temperature. They have, for example, a viscosity of below 50,000 mPas (at 50°C), for example a viscosity of 500 - 20,000 mPas (at 50°C).

Generally the polycarbonate polyols comprise esters of carbonic acid which are obtained by reacting carbonic acid derivatives, for example diphenyl carbonate, dialkylcarbonates, e.g. dimethylcarbonate, or phosgene, with polyols, preferably with diols. Suitable diols which may be considered to prepare the liquid polycarbonatpolyols are, for example, 1,3-propanediol, 2-methyl-1,3-propanediol, 1,4- butanediol, 1,3-butanediol, 1,5-pentandiol, 1,6-hexanediol, 3,3,5-trimethyl pentanediol, neopentylglycol and 2-ethyl-1,3-hexandiol. The polycarbonate polyols are preferably linear.

In particular suitable liquid polycarbonate polyols/diols are those based on a combination of 1,3-propanediol and 1,5-pentandiol, on a combination of 1,3-propanediol and 1,4-butandiol, on a combination of 1,4-butandiol and 1,6-hexanediol or on a combination of 1,5-pentandiol and 1,6-hexanediol. More preferred suitable liquid polycarbonate polyols/diols are those based on a combination of 1,3-propanediol and 1,5-pentandiol, and 1,5-pentandiol and 1,6-hexanediol. The molar ratio of the two diols in each combination is preferably in the range of 3 : 1 to 1 : 3, more preferred 2 : 1 to 1 : 2 and is most preferred 1:1. The molar ratio of 1,5-pentandiol : 1,6-hexanediol in the combination may also be preferably in the range of 3 : 1 to 1 : 3, more preferred 2 : 1 to 1 : 2 and is most preferred 1:1, and the molar ratio of 1,3-propanediol : 1,5-pentandiol may preferably be in the range of 3 : 1 to 1 : 3, more preferred 2 : 1 to 1 : 2 and is most preferred 1:1. Preferred polycarbonate polyols have a hydroxyl number of 40 - 150 mg KOH/g solids and a number average molecular weight Mn of 1000 - 2000. Other diols may also be present in the diol combination, for example, to an extent of 5 - 20 % by weight, based on the total amount of the diol combination. Preferably the diol combination to be used for preparing the polycarbonate polyols consists of 1,5-pentandiol and 1,6-hexanediol or 1,3-propanediol and 1,4-butanediol. The diol combination may also consist of 1,6-hexanediol and 1,4-butanediol in molar ratios as mentioned above. The polycarbonate polyols may be used as single compounds or as a mixture of polycarbonate polyols.

Preferred polycarbonate polyols are polycarbonate diols with 5 - 15 carbonate groups per molecule. The polycarbonate polyols preferably contain substantially no carboxyl groups. They may, for example, have acid values of <3 mg KOH/g solids, preferably of <1 mg KOH/g solids. It is, however, also possible for the polycarbonate polyols to contain carboxyl groups, in which case they may, for example, have acid values of 5 to 50 mg of KOH/g solids.

The polycarbonate polyols and diols are produced in a conventional manner known to the person skilled in the art. For example, the polycarbonate polyols may be synthesized by performing ester exchange between a dialkyl carbonate and a mixture of aliphatic hydroxyl compounds, e.g., a mixture comprising 1,5-pentanediol and 1,6-hexanediol as major components and, optionally, other aliphatic glycols as minor components, in the presence of a catalyst customarily employed for ester exchange reaction. Suitable polycarbonate polyols based on 1,5-pentanediol and 1,6-hexandiol and their preparation are described, for example, in EP 302 712.

Suitable polycarbonate polyols and diols are also commercially available, for example, under the trade name Duranol^{®}, e.g. Duranol^{®} T5652, Duranol^{®} T5651, from Asahi Kasei Chemicals Corporation.

In addition to the polycarbonate polyols further polyols may be used as component b). Suitable polyester polyols are produced in a conventional manner known to the person skilled in the art, for example by polycondensation from organic dicarboxylic acids or the anhydrides thereof and organic polyols. The acid component for the production of the polyester polyols preferably comprises low molecular weight dicarboxylic acids or the anhydrides thereof having 2 to 17, preferably fewer than 16, particularly preferably fewer than 14 carbon atoms per molecule. Suitable dicarboxylic acids are for example phthalic acid, isophthalic acid, alkylisophthalic acid, terephthalic acid, hexahydrophthalic acid, adipic acid, trimethyladipic acid, azelaic acid, sebacic acid, fumaric acid, maleic acid, glutaric acid, succinic acid, itaconic acid and 1,4-cyclohexanedicarboxylic acid. The corresponding anhydrides, where extant, may be used instead of the acids. In order to achieve branching, it is also possible to add proportions of more highly functional carboxylic acids, for example trifunctional carboxylic acids such as trimellitic acid, malic acid and dimethylolpropionic acid.

Polyols usable for the production of the polyester polyols are preferably diols, for example glycols such as ethylene glycol, 1,2-propanediol, 1,2-, 1,3- and 1,4-butanediol, 2-ethylene-1,3-propanediol, 1,6-hexanediol, 1,2- and 1,4-cyclohexanediol, hydrogenated bisphenol A and neopentyl glycol.

The diols may optionally be modified by small quantities of more highly hydric alcohols. Examples of more highly hydric alcohols which may also be used are trimethylolpropane, pentaerythritol, glycerol and hexanetriol. A proportion of chain-terminating, monohydric alcohols may also be used, for example those having 1 to 18 C atoms per molecule, such as propanol, butanol, cyclohexanol, n-hexanol, benzyl alcohol, isodecanol, saturated and unsaturated fatty alcohols.

In addition to the polycarbonate polyols also polyether polyols and/or polylactone polyols may be used as component b). Polyether polyols which may, for example, be considered are polyether polyols of the following general formula:

H (O - (CHR₁)ₙ) ₘ OH,

in which R₁ means hydrogen or a lower alkyl residue (for example C₁ to C₆ alkyl), optionally with various substituents, n means 2 to 6 and m means 10 to 50. The residues R₁ may be identical or different. Examples of polyether polyols are poly(oxytetramethylene) glycols, poly(oxyethylene) glycols and poly(oxypropylene) glycols or mixed block copolymers which contain different oxytetramethylene, oxyethylene and/or oxypropylene units.

The polylactone polyols comprise polyols, preferably diols, which are derived from lactones, preferably from caprolactones. These products are obtained, for example, by reacting an epsilon-caprolactone with a diol. The polylactone polyols are distinguished by repeat polyester moieties which are derived from the lactone. These repeat molecular moieties may, for example, be of the following general formula: 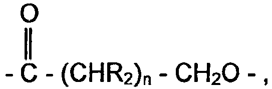 wherein n is preferably 4 to 6 and R₂ is hydrogen, an alkyl residue, a cycloalkyl residue or an alkoxy residue and the total number of carbon atoms in the substituents of the lactone ring does not exceed 12. Preferably used lactones are the epsilon-caprolactones, in which n has a value of 4. Unsubstituted epsilon-caprolactone is here particularly preferred. The lactones may be used individually or in combination. Diols suitable for reaction with the lactones are, for example, ethylene glycol, 1,3-propanediol, 1,4-butanediol and dimethylolcyclohexane.

In addition to component b), one or more low molecular weight polyhydric alcohols, preferably difunctional alcohols, with a molecular weight of below 500 g/mol may optionally also be used. Examples of such compounds are ethylene glycol, 1,2- and 1,3-propanediol, 1,3- and 1,4-butanediol, 1,6-hexanediol, 1,8-octanediol, 1,2- and 1,4-cyclohexanediol, dimethylolpropane, neopentyl glycol.

Preferably component b) consists of 60 to 100 % by weight of the above described liquid polycarbonate polyols and of 0 to 40 % by weight of other polyols. If other polyols are used in addition to the polycarbonate polyols, polyester polyols, in particular polyester diols are preferred. More preferred component b) consists of 100 % by weight of the above described liquid polycarbonate polyols or diols.

Component c) for the preparation of the polyurethane A) comprises low molecular weight compounds which have at least one, preferably more than one, particularly preferably two groups reactive with isocyanate groups and at least one ionic group, group capable of forming ions and/or non-ionic hydrophilic group. Groups capable of forming anions, which may be considered are for example carboxyl, phosphoric acid and sulfonic acid groups. Preferred anionic groups are carboxyl groups. Groups capable of forming cations which may be considered are for example primary, secondary and tertiary amino groups or onium groups, such as quaternary ammonium, phosphonium and/or tertiary sulfonium groups. Anionic groups or groups capable of forming anions are preferred. Preferred non-ionic hydrophilic groups are ethylene oxide groups. Suitable isocyanate-reactive groups are in particular hydroxyl groups and primary and/or secondary amino groups.

Preferred compounds which may be considered as component c) are those containing carboxyl and hydroxyl groups. Examples of such compounds are hydroxyalkanecarboxylic acids of the following general formula:

(HO)ₓQ(COOH)_{y}

in which Q represents a linear or branched hydrocarbon residue with 1 to 12 C atoms and x and y each mean 1 to 3. Examples of such compounds are citric acid and tartaric acid. Carboxylic acids where x = 2 and y = 1 are preferred. A preferred group of dihydroxyalkanoic acids are alpha,alpha-dimethylolalkanoic acids. alpha,alpha-Dimethylolpropionic acid and alpha,alpha-dimethylolbutyric acid are preferred.

Further examples of usable dihydroxyalkanoic acids are dihydroxypropionic acid, dimethylolacetic acid, dihydroxysuccinic acid or dihydroxybenzoic acid. Further compounds usable as component c) are acids containing amino groups, for example alpha,alpha-diaminovaleric acid, 3,4-diaminobenzoic acid, 2,4-diaminotoluenesulfonic acid and 4,4-diaminodiphenyl ether sulfonic acid. Further compounds usable as component c) are e.g. difunctional polyethylene oxide dialcohols.

The polyurethane A) can be produced by initially preparing in a first step an NCO-functional polyurethane prepolymer from components a), b) and c) and optionally further reacting the NCO-functional polyurethane prepolymer with component d).

Components a), b) and c) are reacted together in a conventional manner known to the person skilled in the art, for example at temperatures of 50-120°C, preferably of 70-100°C, optionally with the addition of catalysts. Preferably the components are here reacted in quantities such that a reaction product with free isocyanate groups is obtained, i.e. the reaction is performed with an excess of polyisocyanate. For example, the reaction may be performed with an equivalent ratio of NCO groups : OH groups of 1.2:1 to 2.0:1, preferably of 1.4:1 to 1.9:1. The NCO-polyurethane prepolymer should preferably have an NCO content of 3.0 to 6.0%, particularly preferably of 3.5 to 5.0%.

The polyurethane prepolymer containing NCO groups obtained in the first step may then be reacted in a second step with the functional component d), resulting in an increase in molar mass of the polyurethane. It is endeavoured here to achieve a complete reaction with a virtually equivalent molar ratio between reactive groups of component d) and isocyanate groups of the prepolymer.

Compounds d) contain at least two amino and/or hydroxyl groups. Examples of diamines which may be used as component d) are (cyclo)aliphatic alkyl amines with 1-15 carbon atoms in the molecule and substituted derivatives thereof, wherein the alkyl groups can be linear and/or branched. Component d) may contain primary and/or secondary amino groups. Examples of component d1) are 1,2-ethylendiamine, 1,2-propylenediamine, 1,3-propylenediamine 1,6-hexamethylenediamine, piperazine, 2,5-dimethylpiperazine, 1-amino-3-aminomethyl-3,5,5-trimethylcyclohexane, 4,4'-diaminodicyclohexylmethane, 1,4-diaminocyclohexane, neopentyldiamine, octamethylene diamine, isophorone diamine, 4,4'-diamino diphenylmethane and 2-amino benzamide. Also hydrazine and hydrazide derivatives can be used as, for example, hydrazine, methylhydrazine, adipic acid dihydrazide and sebacic acid dihydrazide.

Further examples of polyamines which may be used as component d) are compounds containing more than two, e.g. three, four or more amino groups in the molecule. Those polyamines may contain primary and/or secondary amino groups. Examples are triamines such as diethylene triamine and dipropylene triamine and tetramines such as triethylene tetramine or tripropylene tetramine. Further examples of polyamines are amines with more than four amino groups such as tetraethylene pentamine and pentaethylene hexamine. By reacting the polyurethane prepolymer in a second step with an amino-functional compound urea groups are formed. Examples of hydroxyl-functional compounds which may be used as component d) are 1,2-ethylene glycol and 1,4-butanediol.

A preferred compound which can be used as component d) is ethylene diamine.

In principle, all components a) to d) are reacted in the manner known to the person skilled in the art. Type and amount of each individual component are selected such that the above-stated characteristics of the resultant polyurethane, such as content of urethane and urea groups, carbonate groups, hydroxyl and acid value, are obtained.

In order to achieve sufficient water-reducibility of the polyurethane the ionic groups or groups convertible into ionic groups of the polyurethane are at least partially neutralised. The polyurethane resin preferably contains anionic groups, for example carboxyl groups. The anionic groups are neutralised with bases. Examples of basic neutralising agents are tertiary amines such as trimethylamine, triethylamine, dimethylethylamine, dimethylbutylamine, N-methylmorpholine, dimethylethanolamine and dimethylisopropanolamine. Even if it is not preferred neutralization can also be done completely or partly by metal hydroxides like LiOH, KOH and NaOH.

Neutralisation may proceed before or after the reaction of the NCO-functional polyurethane prepolymer with component d). After neutralisation, the NCO-functional polyurethane prepolymer or the final polyurethane is converted into the aqueous phase. Neutralisation and conversion into the aqueous phase may, however, also proceed simultaneously. Parallel or in addition to the hydrophilic ionic groups the polyurethane may contain hydrophilic non-ionic groups to provide sufficient water-dilutability. If non-ionic hydrophilic groups, e.g. ethylene oxide groups, are present, it is preferred that they are present in addition to ionic groups, preferably in addition to anionic groups. In addition thereto, it is possible to obtain water-dilutability via external emulsifiers.

Usually the NCO-functional polyurethane prepolymer or the polyurethane are neutralised before or during conversion into the aqueous phase.

According to a preferred embodiment the polyurethane obtained by reacting components a) to c) is chain extended by reaction with component d). The reaction of the NCO-functional polyurethane prepolymer with the component d) may proceed before or after conversion into the aqueous phase. More preferred the reaction proceeds in the aqueous phase.

The equivalent ratio of reactive functional groups of component d) to isocyanate groups of the NCO-functional polyurethane prepolymer is preferably in the range of 1 : 2 to 1 : 1. Remaining isocyanate groups can react with water during or after inversion into the aqueous phase. It is also possible, but not preferred, to perform a chain extension of the NCO-functional polyurethane prepolymer with water only, i.e. without using component d).

The resulting aqueous polyurethane dispersion has a solids content of, for example 25-50 % by weight, preferably of 30-45 % by weight.

The water-dilutable polyurethane A) may optionally be used in combination with proportions of further water-dilutable resins. Further water-dilutable resins which may be considered are, for example, conventional water-dilutable(meth)acrylic copolymers, polyester resins and optionally modified polyurethane resins differing from the above-described water-dilutable polyurethane resins. Additional water-dilutable resins may be used in amounts of 10 to 200 % by weight based on polyurethane A) resin solids.

The coating composition used in the process according to the invention may optionally comprise at least one curing agent B) which curing agent is capable of entering into a cross-linking reaction with reactive functional groups, e.g. hydroxyl groups, of polyurethane A) and of additional binder components. The agents which can be used are not subject to any particular restrictions. All curing agents usually used to prepare aqueous coating compositions, e.g., in the field of automotive and industrial coating can be used. Those curing agents as well as preparation methods for the curing agents are known to the person skilled in the art and are disclosed in detail in various patents and other documents. Depending on the type of reactive functional groups of plyurethane A) and the optionally present additional binders the following cross-linking agents may, for example, be used: polyisocyanates with free isocyanate groups or with at least partially blocked isocyanate groups, amine/formaldehyde condensation resins, for example, melamine resins. In a preferred embodiment polyurethane A) and the optionally present additional binders contain hydroxyl groups and curing agents with free polyisocyanate groups are used.

The binder components and the curing agent are used in such proportion that the equivalent ratio of reactive functional groups of polyurethane A) and additional binders to the corresponding reactive groups of the curing agent B) can be 5:1 to 1:5, for example, preferably, 3:1 to 1:3, and in particular, preferably, 1.5:1 to 1:1.5.

The water-based coating compositions used in the process of the present invention contain at least one pigment C). Pigments C) may be any color and/or special effect imparting pigment, that provide the final coating with a desired color and/or effect.

Suitable pigments are virtually any special effect-imparting pigments and/or color-imparting pigments selected from among white, colored and black pigments, in particular those typically used in pigmented base coat coating compositions in vehicle coating.

Examples of special effect pigments are conventional pigments which impart to a coating a special effect, e.g. a color and/or lightness flop dependent on the angle of observation, are metal pigments. Example of metal pigments are those made from aluminum, copper or other metals, interference pigments such as, for example, metal oxide coated metal pigments, for example, iron oxide coated aluminum, coated mica such as, for example, titanium dioxide coated mica, pigments which produce a graphite effect, iron oxide in flake form, liquid crystal pigments, coated aluminum oxide pigments, coated silicon dioxide pigments. Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, perylene pigments. Preferably the coating compositions used in the process of the present invention contain at least one effect-imparting pigment, optionally in combination with at least one colour-imparting pigment.

In addition the coating compositions used in the process of the present invention may contain conventional coating additives. Examples of conventional coating additives are levelling agents, rheological agents, such as highly disperse silica, polymeric urea compounds or layered silicates, thickeners, such as partially crosslinked polycarboxylic acid or polyurethanes, defoamers, wetting agents, anticratering agents, dispersants and catalysts. The additives are used in conventional amounts known to the person skilled in the art, for example, of 0.1 to 5 wt.%, relative to the solids content of the coating composition.

The water-based coating compositions may contain conventional coating solvents, for example, in a proportion of preferably less than 20 wt.%, particularly preferably of less than 15 wt.%. These are conventional coating solvents, which may originate, for example, from the production of the binders or are added separately. Examples of such solvents are those mentioned already above in the description of the layered silicate containing compositions. Furthermore, the coating compositions used in the process of the present invention contain water, preferably 50-80 % by weight, especially preferred 60-75 5 by weight, relative to the entire coating composition.

The water-based coating compositions have solids contents of, for example, 10 to 45 % by weight, preferably of 15 to 35 % by weight. The ratio by weight of pigment content to the resin solids content is, for example, from 0.05 : 1 to 2 : 1. For special-effect water-based base coat coating compositions it is preferably 0.06 : 1 to 0.6 : 1 and for solid color (single-tone) water-based base coat coating compositions it is preferably higher, for example, 0.06 : 1 to 2 : 1, in each case relative to the weight of solids.

In order to produce the water-based coating compositions, it is possible to use paste resins or dispersing agents for grinding or incorporating the pigments.

The present invention also relates to the use of the above described process using water-based coating compositions in multilayer coating of substrates, in particular in multilayer coating or repair coating of vehicles.

A preferred process of multilayer coating includes the step applying the base coat layer of the above-described water-based coating composition onto a pre-coated substrate. Suitable substrates are metal and plastics substrates, in particular the substrates known in the automotive industry, such as for example iron, zinc, aluminium, magnesium, stainless steel or the alloys thereof, together with polyurethanes, polycarbonates or polyolefins. Any other desired industrial goods from industrial coating processes may however also be coated as substrates.

In the case of vehicle body or vehicle body part coating, the water-based coating compositions are applied, preferably by means of spraying, onto the vehicle or vehicle part substrates pre-coated in conventional manner with primers and/or primer surfacers.

The clear coat layer may be applied onto the base coat layer either after drying or curing or wet-on-wet, optionally after briefly flashing off. Suitable clear coat compositions are, in principle, any known un-pigmented or transparently pigmented coating compositions as are, for example, conventional in vehicle coating. They may here comprise single or two-component solvent- or water-based clear coat compositions. The final coatings may be cured at room temperature or be forced at higher temperatures, for example of up to 80°C, preferably at 40 to 60°C. They may, however, also be cured at higher temperatures of for example 80-160°C. Curing temperatures are determined by the field of use as well as the by the type of the optional curing agent.

The process according to the invention may particularly advantageously be used in vehicle repair coating. In vehicle repair coating, pigmented coating compositions of a particular color and/or effect are generally prepared by mixing tints of different color to provide a coating with a desired color and/or effect. The coating compositions used in the process according to the invention may thus also be used, for example, as a component of a "paint mixing system", as is in particular used in vehicle repair coating for the production of color-imparting and/or special effect-imparting base coat coating compositions. As is known, such a paint mixing system is based on a defined number of individual standardized mixing components containing coloring and/or special effect pigments and optionally further components, for example binder components, which can be mixed according to a mix formula to yield a coating with the desired color/special effect.

The following examples are intended to illustrate the invention in greater detail. All parts and percentages are on a weight basis unless otherwise indicated.

### Examples

### Example 1

### Preparation of Polyrurethane Dispersions A and B

20.36 parts by weight of a polycarbonatediol (polycarbonatediol A according to the invention; comparative polycarbonatediol B), 6.5 parts by weight of acetone and 0.004 parts by weight of dibutyltin dilaurate are initially introduced into a four neck glass reactor equipped with stirrer, condenser and thermocouple and the mixture is heated to 50 °C and homogenized. 9.3 parts by weight of isophorone diisocyanate are apportioned at this temperature within 30 minutes. 0.5 parts by weight of acetone are then added. The temperature is maintained at 50°C until an NCO content of 6.8-7.2 % (relative to the solution) is reached. Once the NCO content has been reached, 1.88 parts by weight of dimethylolpropionic acid, 1.04 parts by weight of dimethyl isopropylamine and 0.5 parts by weight of acetone are added. The temperature is then maintained at 50 ° C until an NCO content of 3.1-3.4 % (relative to the solution) is reached. Once the NCO content has been reached, the heating is switched off and 48.0 parts by weight of deionised water are added within 10 minutes. A mixture of 0.64 parts by weight of ethylene diamine in 11.32 parts by weight of water is then immediately added within 5 minutes. The temperature is then raised to 70 °C and vacuum distillation is performed to remove acetone. A solids content of 35 % by weight is then established by the addition of deionised water.

| Polyurethane dispersion | A (according to invention) | B (Comparison) |
|---|---|---|
| Polycarbonatediol | Liquid Polycarbonatediol A (Duranol® T5652 from Asahi Kasai; polymer based on 1,6-hexanediol and 1,5-pentanediol in a rmixture of 50:50; OH value of 51-61 mg of KOH/g, number average molar mass of 2000 g/mol; melting point of < /= - 5°C) | Solid Polycarbonatediol B (Duranol® T 6002 from Asahi Kasai; polymer based on 1,6-hexanediol; OH value of 51-61 mg of KOH/g, number average molar mass of 2000 g/mol; melting point 40-50°C) |

### Example 2

### Preparation of effect pigment containing base coat coating compositions

Aqueous basecoat coat coating compositions A and B (BC A and BC B) have been prepared.

### BC A (according to the invention):

The following components have been mixed in the following order:
3.8 parts by weight of n-pentanol
4.4 parts by weight of n-propanol
4.4 parts by weight of propylene glycol monomethylether (Dowanol ® PM)
10.9 parts by weight of de-ionized water
3.5 parts by weight of a 10% solution of N,N,-dimethylethanolamine
2.2 parts by weight of a dispersing and passivating phosphated acrylic.(*)
8.7 parts by weight of commercially available effect pigment (Xirallic T60-23SW - Galaxy Blue - Merck)
16.4 parts by weight of aqueous acrylic latex (US 7,825,173, aqueous binder latex of Example 1)
9.2 parts by weight of de-ionized water
30.4 parts by weight of polyurethane dispersion A
5.0 parts by weight of a 10% aqueous solution of commercially available thickener ( Viscalex HV30 - Ciba)
Final pH : 7.5- 7.8
Final viscosity : 1700- 2500 mPas (measured on Brookfield viscosimeter RVF at 5 RPM)

### BC B (Comparison)

The following components have been mixed in the following order:
3.8 parts by weight of n-pentanol
4.4 parts by weight of n-propanol
4.4 parts by weight of propylene glycol monomethylether (Dowanol ® PM)
10.9 parts by weight of de-ionized water
3.5 parts by weight of a 10% solution of N,N,-dimethylethanolamine
2.2 parts by weight of a dispersing and passivating phosphated acrylic.(*)
8.7 parts by weight of commercially available effect pigment (Xirallic T60-23SW - Galaxy Blue - Merck)
16.4 parts by weight of aqueous acrylic latex (US 7,825,173, aqueous binder latex of Example 1)
9.2 parts by weight of de-ionized water
30.4 parts by weight of polyurethane dispersion B
5.0 parts by weight of a 10% aqueous solution of commercially available thickener ( Viscalex HV30 - Ciba)
Final pH : 7.5- 7.8
Final viscosity : 1700- 2500 mPas ( measured on Brookfield viscosimeter RVF at 5 RPM)
(*) Phosphated acrylic is obtained by radical polymerization in isopropanol of styrene (30 parts by weight) / 2- ethylhexylacrylate (17.5 parts by weight) / 2-ethylhexylmethacrylate (20 parts by weight) /2-hydroxyethyl methacrylate (15 parts by weight)/acrylic acid (10 parts by weight) / methacrylo-oxy -phosphate (7.5 parts by weight, MOP = reaction product of hydroxyethyl methacrylate and polyphosphoric acid); final solids : 60 %)

The viscosity stability of the described of BC A and BC B have been followed in function of time (t) in closed containers at room temperature.

| | Viscosity* (mPas) | | |
|---|---|---|---|
| | t=0 | t=7 months | t=8 months |
| BC A | 1752 | 2024 | 2100 |
| BC B | 1900 | not measurable | not measurable |

| | | | |
|---|---|---|---|
| *Viscosity measured on Brookfield viscosimeter RVF at 5 RPM | | | |

The results clearly show that the base coat coating composition prepared according to the invention (BC A) had remarkably improved stability compared with comparative base coat coating composition (BC B). After seven month comparative BC B could no longer be processed due to instability of the composition. The viscosity of coating comparative BC B had been increased such that viscosity measurement was not possible.

## Claims

1. Process for the multilayer coating of substrates comprising the following steps:
I) applying a base coat layer of a water-based colour and/or special effect-imparting base coat composition onto an optionally pre-coated substrate,
II) optionally curing the base coat layer obtained in step I;
III) applying a clear coat layer of a transparent clear coat composition onto the base coat layer and
IV) curing the clear coat layer applied in step III optionally together with the base coat layer,
wherein the water-based colour- and/or special effect-imparting base coat composition is a water-based coating composition comprising
A) at least one water-dilutable polyurethane binder,
B) optionally at least one curing agent, and
C) at least one effect pigment,
**characterised in that** the at least one water-dilutable polyurethane binder is based on at least one polyhydroxyl compound, said polyhydroxyl compound comprises at least 50 % by weight of at least one polycarbonate polyol, which is liquid at 20°C, the % by weight are based on the total amount of the polyhydroxyl compound.

2. The process of claim 1, wherein the at least one water-dilutable polyurethane binder is obtained by reacting components comprising:
a) at least one polyisocyanate,
b) at least one polyhydroxyl compound, said polyhydroxyl compound comprising at least 50 % by weight of at least one polycarbonate polyol, which is liquid at 20°C, the % by weight are relative to the total amount of polyhydroxyl compound b),
c) at least one compound containing at least one functional group reactive towards isocyanate groups and at least one group selected from a group consisting of ionic group, group capable of forming ions and non-ionic hydrophilic group.

3. The process of claim 1 or 2, wherein the water-dilutable polyurethane binder comprises at least 100 milliequivalents of carbonate groups (per 100 g polyurethane binder solids).

4. The process of claim 1 or 2, wherein the water-dilutable polyurethane binder comprises at least 100 milliequivalents of carbonate groups (per 100 g polyurethane binder solids) and at least 100 milliequivalents of urethane and urea groups (per 100 g polyurethane binder solids).

5. The process of any one of claims 1 to 4, wherein the water-dilutable polyurethane binder A) has a number average molecular weight Mn of 500 - 20,000 and a weight average molecular weight Mw of 20,000 - 500,000, a hydroxyl number of 0 to 150 mg KOH/g and an acid number of 15 - 50 mg KOH/g.

6. The process of any one of claims 2 to 5, wherein the at least one polyhydroxyl compound b) has a number average molecular weight Mn of 300 - 5000.

7. The process of any one of claims 2 to 6, wherein the polyhydroxyl compound b) comprises 60 - 100 % by weight of the at least one polycarbonate polyol, which is liquid at 20 °C, the % by weight are relative to the total amount of polyhydroxyl compound b).

8. The process any one of claims 2 to 7, wherein the water-dilutable polyurethane binder is obtained by reacting components comprising components a), b) and c) and further comprising at least one at least di-functional compound d) having hydroxyl and/or amino groups.

9. The process of any one of claims 1 to 8. wherein the polycarbonate polyol which is liquid at 20 °C is based on a combination of 1,3-propanediol and 1,5-pentandiol, on a combination of 1,3-propanediol and 1,4-butandiol, on a combination of 1,4-butandiol and 1,6-hexanediol and/or on a combination of 1,5-pentandiol and 1,6-hexanediol.

10. The process of any one of claims 1 to 9, wherein the polycarbonate polyol which is liquid at 20 °C is based on a combination of 1,5-pentandiol and 1,6-hexanediol and/or a combination of 1,3-propranediol and 1,4-butanediol.

11. The process of claim 9 or 10, wherein the molar ratio of the two diols in each combination is in the range of 3 : 1 to 1 : 3.

12. Use of the process of any one of claims 1 to 11 in vehicle repair coating.

## Patentansprüche

1. Verfahren zum mehrschichtigen Beschichten von Substraten, umfassend die folgenden Schritte:
I) Aufbringen einer Basislackschicht aus einer Farb- und/oder Spezialeffekt verleihenden Basislackzusammensetzung auf Wasserbasis auf ein wahlweise vorbeschichtetes Substrat,
II) wahlweises Aushärten der in Schritt I erhaltenen Basislackschicht;
III) Aufbringen einer Klarlackschicht aus einer transparenten Klarlackzusammensetzung auf die Basislackschicht und
IV) Aushärten der in Schritt III aufgebrachten Klarlackschicht, wahlweise zusammen mit der Basislackschicht,
wobei die Farb- und/oder Spezialeffekt verleihenden Basislackzusammensetzung auf Wasserbasis eine Beschichtungszusammensetzung aus Wasserbasis ist umfassend
A) mindestens ein wasserverdünnbares Polyurethanbindemittel,
B) wahlweise mindestens ein Aushärtungsmittel und
C) mindestens ein Effektpigment,
**dadurch gekennzeichnet, dass** das mindestens eine wasserverdünnbare Polyurethanbindemittel auf mindestens einer Polyhydroxylverbindung basiert, wobei die Polyhydroxylverbindung mindestens 50 Gew.-% mindestens eines Polycarbonatpolyols umfasst, das bei 20 °C flüssig ist, wobei die Gew.-% auf der Gesamtmenge der Polyhydroxylverbindung basieren.

2. Verfahren nach Anspruch 1, wobei das mindestens eine wasserverdünnbare Polyurethanbindemittel durch Reagieren von Komponenten erhalten wird, umfassend
a) mindestens ein Polyisocyanat,
b) mindestens eine Polyhydroxylverbindung, wobei die Polyhydroxylverbindung mindestens 50 Gew.-% mindestens eines Polycarbonatpolyols umfasst, das bei 20 °C flüssig ist, wobei die Gew.-% auf der Gesamtmenge der Polyhydroxylverbindung b) basieren,
c) mindestens eine Verbindung, die mindestens eine funktionelle Gruppe enthält, die Isocyanatgruppen gegenüber reaktiv ist und mindestens eine Gruppe ausgewählt aus der Gruppe bestehend aus ionischer Gruppe, Gruppe, die des Bildens von Ionen fähig ist, und nichtionischer hydrophiler Gruppe.

3. Verfahren nach Anspruch 1 oder 2, wobei das wasserverdünnbare Polyurethanbindemittel mindestens 100 Milliäquivalente von Carbonatgruppen (pro 100 g Polyurethanbindemittelfeststoffe) umfasst.

4. Verfahren nach Anspruch 1 oder 2, wobei das wasserverdünnbare Polyurethanbindemittel mindestens 100 Milliäquivalente von Carbonatgruppen (pro 100 g Polyurethanbindemittelfeststoffe) und mindestens 100 Milliäquivalente Urethan und Urethangruppen (pro 100 g Polyurethanbindemittelfeststoffe) umfasst.

5. Verfahren nach einem der Ansprüche 1 bis 4, wobei das wasserverdünnbare Polyurethanbindemittel A) ein zahlendurchschnittliches Molekulargewicht von 20,000 - 500,000, eine Hydroxylzahl von 0 bis 150 mg KOH/g und eine Säurezahl von 15 bis 50 mg KOH/g aufweist.

6. Verfahren nach einem der Ansprüche 1 bis 6, wobei die mindestens eine Polyhydroxylverbindung b) ein zahlendurchschnittliches Molekulargewicht Mn von 300 - 5000 aufweist.

7. Verfahren nach einem der Ansprüche 2 bis 6, wobei die Polyhydroxylverbindung b) 60 -100 Gew.-% des mindestens einen Polycarbonats umfasst, das bei 20 °C flüssig ist, wobei die Gew.-% auf der Gesamtmenge der Polyhydroxylverbindung basieren.

8. Verfahren nach einem der Ansprüche 2 bis 7, wobei das wasserverdünnbare Polyurethanbindemittel durch Reagieren von Komponenten, die die Komponenten a), b) und c) umfassen, erhalten wird, und des Weiteren mindestens eine mindestens difunktionelle Verbindung umfassend, die Hydroxyl- und/oder Aminogruppen aufweist.

9. Verfahren nach einem der Ansprüche 1 bis 8, wobei das Polycarbonatpolyol bei 20 °C flüssig ist, auf einer Kombination von 1,3-Propandiol und 1,5-Pentandiol basiert, auf einer Kombination von 1,3-Propandiol und 1,4-Butandiol, auf einer Kombination von 1,4-Butandiol und 1,6-Hexandiol und/oder einer Kombination von 1,5-Pentandiol und 1,6-Hexandiol basiert.

10. Verfahren nach einem der Ansprüche 1 bis 9, wobei das Polycarbonatpolyol, das bei 20 °C flüssig ist, auf einer Kombination von 1,5-Pentandiol und 1,6-Hexandiol und/oder einer Kombination von 1,3-Propandiol und 1,4-Butandiol basiert.

11. Verfahren nach Anspruch 9 oder 10, wobei das Molverhältnis der beiden Diole in jeder Kombination im Bereich von 3 : 1 bis 1 : 3 liegt.

12. Verwendung nach einem der Ansprüche 1 bis 11 in einer Fahrzeugreparaturbeschichtung.

## Revendications

1. Procédé de revêtement multicouche de substrats comprenant les étapes suivantes consistant à :
I) appliquer une couche de revêtement de base d'une composition aqueuse de revêtement de base offrant une couleur et/ou un effet particulier sur un substrat facultativement prétraité,
II) durcir facultativement la couche de revêtement de base obtenue dans l'étape I,
III) appliquer une couche de vernis d'une composition de vernis transparent sur la couche de revêtement de base, et
IV) durcir la couche de vernis appliquée dans l'étape III, facultativement avec la couche de revêtement de base,
dans lequel la composition aqueuse de revêtement de base offrant une couleur et/ou un effet particulier est une composition aqueuse de revêtement comprenant
A) au moins un liant de polyuréthane diluable dans l'eau,
B) facultativement au moins un agent de durcissement, et
C) au moins un pigment à effet,
**caractérisé en ce que** l'au moins un liant de polyuréthane diluable dans l'eau est basé sur au moins un composé polyhydroxyle, ledit composé polyhydroxyle comprenant au moins 50 % en poids d'au moins un polyol de polycarbonate, qui est liquide à 20 °C, le % en poids étant basé sur la quantité totale du composé polyhydroxyle.

2. Procédé selon la revendication 1, dans lequel l'au moins un liant de polyuréthane diluable dans l'eau est obtenu en faisant réagir les composants comprenant :
a) au moins un polyisocyanate,
b) au moins un composé polyhydroxyle, ledit composé polyhydroxyle comprenant au moins 50 % en poids d'au moins un polyol de polycarbonate, qui est liquide à 20 °C, le % en poids étant basé sur la quantité totale du composé polyhydroxyle b),
c) au moins un composé contenant au moins un groupe fonctionnel réactif vis-à-vis des groupes isocyanate et au moins un groupe sélectionné dans le groupe constitué par un groupe ionique, un groupe capable de former des ions et un groupe hydrophile non ionique.

3. Procédé selon la revendication 1 ou 2, dans lequel le liant de polyuréthane diluable dans l'eau comprend au moins 100 milliéquivalents de groupes carbonate (pour 100 g de solides de liant de polyuréthane).

4. Procédé selon la revendication 1 ou 2, dans lequel le liant de polyuréthane diluable dans l'eau comprend au moins 100 milliéquivalents de groupes carbonate (pour 100 g de solides de liant de polyuréthane) et au moins 100 milliéquivalents de groupes uréthane et urée (pour 100 g de solides de liant de polyuréthane).

5. Procédé selon l'une quelconque des revendications 1 à 4, dans lequel le liant de polyuréthane diluable dans l'eau A) a un poids moléculaire moyen en nombre Mn de 500 à 20 000 et un poids moléculaire moyen en poids Mp de 20 000 à 500 000, un indice d'hydroxyle de 0 à 150 mg KOH/g et un indice d'acide de 15 à 50 mg KOH/g.

6. Procédé selon l'une quelconque des revendications 2 à 5, dans lequel l'au moins un composé polyhydroxyle b) a un poids moléculaire moyen en nombre Mn de 300 à 5000.

7. Procédé selon l'une quelconque des revendications 2 à 6, dans lequel le composé polyhydroxyle b) comprend de 60 à 100 % en poids de l'au moins un polyol de polycarbonate, qui est liquide à 20 °C, le % en poids étant basé sur la quantité totale du composé polyhydroxyle b).

8. Procédé selon l'une quelconque des revendications 2 à 7, dans lequel le liant de polyuréthane diluable dans l'eau est obtenu en faisant réagir les composants comprenant les composants a), b) et c) et comprenant en outre au moins un composé au moins difonctionnel d) ayant des groupes hydroxyle et/ou amino.

9. Procédé selon l'une quelconque des revendications 1 à 8, dans lequel le polyol de polycarbonate qui est liquide à 20 °C est basé sur une combinaison de 1,3-propanediol et de 1,5-pentanediol, sur une combinaison de 1,3-propanediol et de 1,4-butanediol, sur une combinaison de 1,4-butanediol et de 1,6-hexanediol et/ou sur une combinaison de 1,5-pentanediol et de 1,6-hexanediol.

10. Procédé selon l'une quelconque des revendications 1 à 9, dans lequel le polyol de polycarbonate qui est liquide à 20 °C est basé sur une combinaison de 1,5-pentanediol et de 1,6-hexanediol et/ou sur une combinaison de 1,3-propanediol et de 1,4-butanediol.

11. Procédé selon la revendication 9 ou 10, dans lequel le rapport molaire des deux diols de chaque combinaison est compris dans la plage allant de 3:1 à 1:3.

12. Utilisation du procédé selon l'une quelconque des revendications 1 à 11 dans un revêtement de réparation de véhicule.
